# EUROPEAN PATENT SPECIFICATION

(11) **EP 0 426 447 B1**
(45) Date of publication and mention of the grant of the patent: **11.12.1996**
(21) Application number: 90311918.8
(22) Date of filing: 31.10.1990
(51) Int. Cl.: G11B 21/08, G11B 7/085

(54) **Track jump control circuit**
Spursprungsteuerungsschaltung
Circuit de commande de saut de piste

(30) Priority: 31.10.1989 JP 285912/89
(43) Date of publication of application: 08.05.1991
(73) Proprietor: KABUSHIKI KAISHA TOSHIBA, Kawasaki-shi, Kanagawa-ken 210 (JP)
(72) Inventor: Nakane, Hiroshi c/o Intellectual Property Division, Minato-ku Tokyo (JP)
(74) Representative: Freed, Arthur Woolf

(56) References cited:
- EP-A- 0 312 410
- EP-A- 0 361 381
- DE-A- 3 626 029
- US-A- 4 748 607

## Description

The present invention relates to a track jump control circuit used in an optical record and playback apparatus or the like.

Generally, in an optical record and playback apparatus such as a compact disc player (CD player), or compact disc ROM (CD-ROM), information stored on a disc is read by a pick-up.

In such an optical record and playback apparatus, when reading information by means of the pick-up, the pick-up is moved at a low speed so as to follow tracks. When placing the pick-up to a desired position, the pick-up is moved at a high speed so as to jump tracks.

A track jump control circuit for conducting such a track jump operation is disclosed in Japanese Patent Application Serial No. SHO 60-117203.

With the track jump control circuit, in the track jump state, the moving speed of the pick-up is detected. The completion of the track jump operation is determined by the moving speed.

However, with the aforementioned track jump control circuit, if a vibration is applied to the optical record and playback apparatus, the vibration component is added to the speed signal of the pick-up. Thus, the completion of the track jump cannot be precisely determined.

In addition, the speed signal of the pick-up is obtained only after the pick-up is moved. Thus, the response of the early stage of the track jump is slow.

We acknowledge the disclosure in US-A-4748607 of a track jump control system in which, once the pick-up device has been moved to within a predetermined distance of its desired position, the motor is switched off, so that it subsequently overshoots under its own momentum. Optionally, the drive is then reversed, but the pick-up still overshoots.

We also acknowledge that EP-A-0312410 discloses a track jump control circuit in which the pick-up is stopped, during track jump, when its position matches a target distance.

An object of the present invention is to solve the aforesaid problems and to provide a track jump control circuit for determining the completion of the track jump operation.

The invention provides a track jump control circuit as defined in Claim 1.

Since the completion of the track jump operation is determined in accordance with the position signal, even if a vibration is applied to the apparatus, the completion of the track jump can be precisely determined. The position error signal is less affected by an external vibration frequency than the speed signal.
FIG. 1 is a block diagram showing the structure of a track jump control circuit of a first embodiment of the present invention;
FIG. 2 is a circuit diagram of the track jump control circuit of the first embodiment of the present invention;
FIG. 3 is a wave form schematic of each signal of FIG. 2;
FIG. 4 is a block diagram showing the structure of a track jump control circuit of a second embodiment of the present invention; and
FIG. 5 is a circuit diagram showing the track jump control circuit of the second embodiment of the present invention.

By referring to the accompanying drawings, embodiments of the present invention will be described in the following.

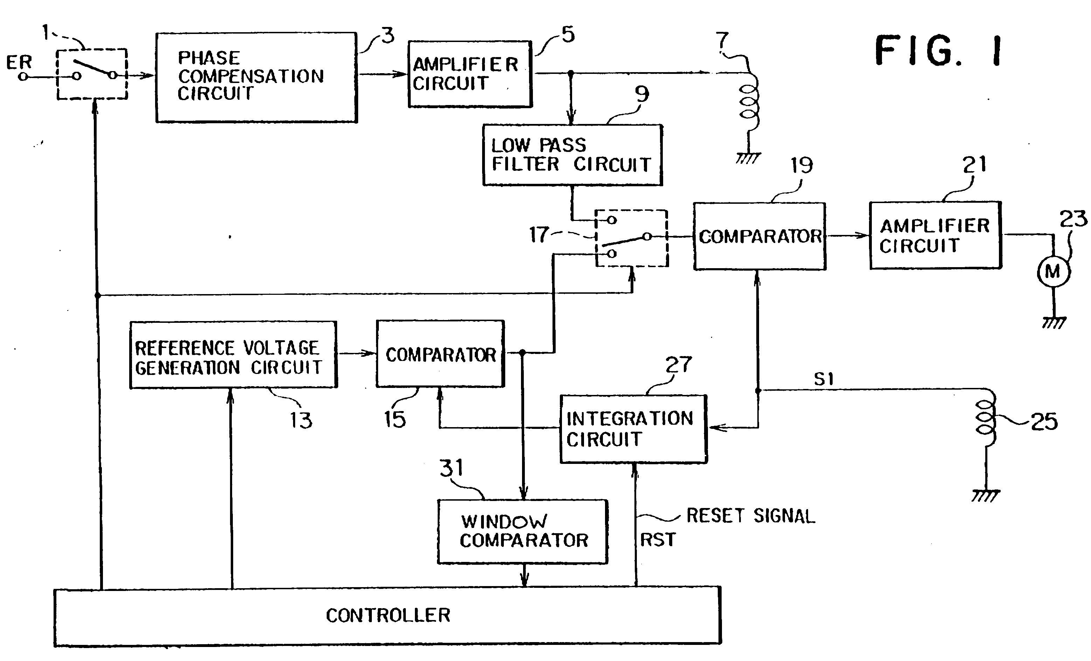

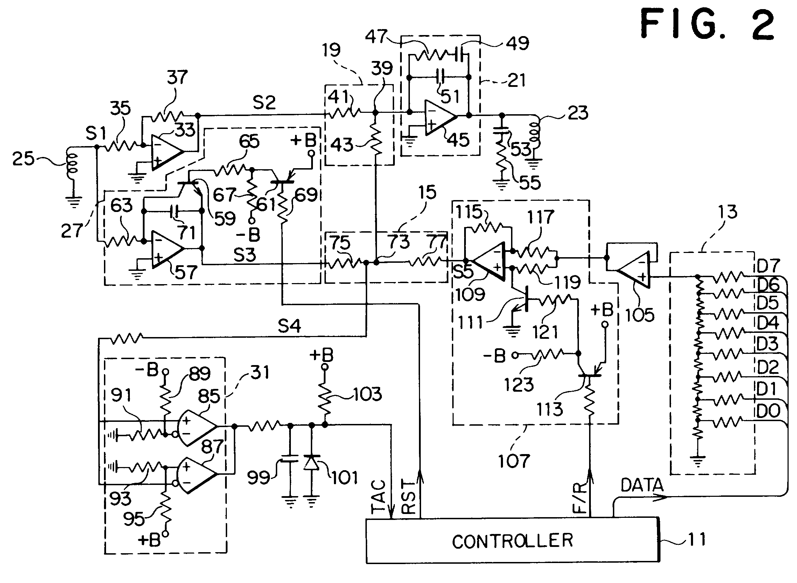

FIG. 1 is a block diagram showing the structure of a track jump control circuit. FIG. 2 is a circuit diagram of the track jump control circuit.

FIG. 1 includes circuits which are not illustrated in FIG. 2. In contrast, FIG. 2 includes circuits which are not illustrated in FIG. 1.

The track jump control circuit comprises a switch 1, a phase compensation circuit 3, an amplifier circuit 5, a tracking actuator 7, a low pass filter 9, a controller 11, a reference voltage generation circuit 13, a comparator 15, a switch 17, a comparator 19, a amplifier circuit 21, a motor 23 a speed detector 25, an integration circuit 27, and a window comparator 31.

The switch 1 sends a tracking error signal ER to the phase compensation circuit 3 in accordance with a command issued by the controller 11. The phase compensation circuit 3 converts the phase of the tracking error signal ER.

The amplifier circuit 5 amplifies an output signal of the phase compensation circuit 3 and sends the resultant signal to the tracking actuator 7 and the low pass filter 9 so as to form a tracking servo loop. The low pass filter 9 sends a low frequency component of an output signal of the amplifier circuit 5 to the switch 17.

The switch 1, the phase compensation circuit 3, the amplifier circuit 5, the tracking actuator 7, the low pass filter 9, and the switch 17 are omitted in FIG. 2.

The controller 11 controls the switches 1 and 17 and sends a particular signal to the reference voltage generation circuit 13 and a reset signal RST to the integration circuit 27, respectively. The reference voltage generation circuit 13 consists of a ladder resister, which converts track jump data portions DO to D7 which are sent from the controller 11 into an analog signal. A arithmetic amplifier 105 converts an impedance to another one.

A direction switching device 107 outputs a signal according to the direction where the pick-up is moved by means of a signal F/R which is sent from the controller 11. The direction switching device 107 consists of an arithmetic amplifier 109, transistors 111 and 113, and resisters 115, 117, 119, 121, and 123, the resistance of the resister 115 being the same as that of the resister 117.

When the signal F/R is set to "1", the transistor 111 is turned off. Thus, the arithmetic amplifier 109 functions as a non-inverting amplifier whose gain is "1". In contrast, when the signal F/R is set to "0", the transistor 111 is turned on. Thus, the arithmetic amplifier 109 functions as an inverting amplifier whose gain is "-1". In other words, when the signal F/R is set to "1", the direction switching device 107 outputs an output of the arithmetic amplifier 105 as it is. When the signal F/R is set to "0", the direction switching device 107 outputs the inverted signal which is output from the arithmetic amplifier 105.

The comparator 15, which consists of resisters 75 and 77, compares an output signal S5 of the direction switching device 107 with an output signal S3 of the integration circuit 27 and sends a difference signal (position error signal) S4 to the window comparator 31 and the comparator 19.

The switch 17 selects one of output signals of the low pass filter 9 and the comparator 15 according to a command from the controller 11 and outputs the selected signal. The speed detector 25 detects the moving speed of a pick-up (not shown in the figures) and outputs a speed signal S1. An arithmetic amplifier 33 amplifies the speed signal S1 and output a signal S2.

The comparator 19, which consists of resistors 41 and 43, compares the signal S2 with an output of the comparator 15.

The amplifier circuit 21, which consists of an arithmetic amplifier 45, a resistor 47, and condensers 49 and 51, amplifies an output signal of the comparator 19. The condensers 51 and 53 and the resisters 47 and 55 are used to compensate the phase.

The motor 23 moves the pick-up according to an output signal of the amplifier circuit 21.

The integration circuit 27 integrates the speed signal S1 from the speed detector 25, obtains the output signal S3, and outputs it to the comparator 15. The integration circuit 27 consists of an arithmetic amplifier 57, transistors 59 and 61, resisters 63, 65, 67, and 69, and a condenser 71.

When the reset signal RST, which is sent from the controller, is set to "1", the transistor 59 is turned off and thereby the arithmetic amplifier 57 functions as an integration circuit. In contrast, when the reset signal RST is set to "0", the transistors 69 and 59 are turned on. Thus, since both the ends of the condenser 71 are shortcircuited, an output of the arithmetic amplifier 57 is "0" and thereby an initial value is set.

The window comparator 31 consists of comparators 85 and 87 and resisters 89, 91, 93, and 95. When the position error signal S4 is in a voltage range determined by the resisters 89, 91, 93, and 95, an output signal TAC is set to 1. When the position error signal S4 is out of such a range, the output signal TAC is set to "0".

A resister 103 is a pull-up resister. A diode 101 is a protection diode for preventing a negative voltage from being applied to the controller 11. A condenser 99 is a noise arrester condenser.

Then, by referring to FIG. 1, an outline of the operation of the track jump control circuit will be described in the following.

In track following state (position control state) where the pick-up is followed to a particular track so as to read information, the controller 11 causes the switch 1 to be closed and the switch 17 to be placed in the low pass filter 9 side. In this state, the tracking error signal ER and the output signal S1 of the speed detector 25 are input to the comparator 19. The comparator 19 compares these signals and sends the difference signal to the motor 23.

In track jump state (speed control state), the controller 11 causes the switch 1 to be opened and the switch 17 to be placed on the comparator 15 side. The controller 11 sends data equivalent to the distance for which the pick-up is moved to a desired position to the reference voltage generation circuit 13. The integration circuit 27 outputs the position signal of the pick-up. The comparator 15 compares these signals and sends the resultant signal to the motor 23 so as to move the pick-up to the desired position.

The completion state of the track jump is determined in the following manner.

Since the output signal of the comparator 15 is input to the wind comparator 31 as shown in FIG. 2, when the output signal of the comparator 15 is in the voltage range determined by the resisters 89, 91, 93, and 95, the output signal of the window comparator 31 is set to "1". Thus, the controller 11 determines that the track jump operation was completed.

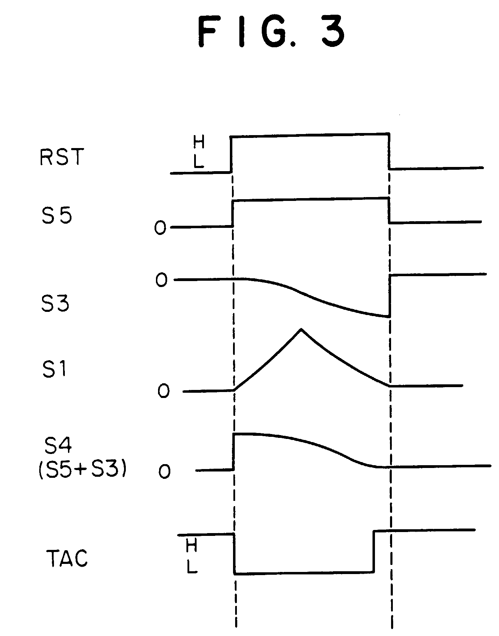

Then, by referring to FIGS. 2 and 3, the operation in the track jump state of the track jump control circuit will be described in detail.

FIG. 3 is a wave form diagram of each signal of FIG. 2.

In the track jump state, the controller 11 determines the track jump direction and sets the signal F/R to "0" or "1". When the signal F/R is set to "1", the direction switching device 107 functions as a non-inverting amplifier whose gain is "1". In contrast, when the signal F/R is set to "0", the direction switching device 107 functions as an inverting amplifier whose gain is "-1".

Then, the controller 11 sets the reset signal RST to "1". At that time, the transistor 59 is turned off and the arithmetic amplifier 57 is in an integration state. At that time, since the output signal of the speed detector 25 does not take place, the signals S1, S2, and S3 are kept to "0".

Then, the controller 11 sends data equivalent to the difference between the present position and the desired position of the pick-up to the reference voltage generation circuit 13. The reference voltage generation circuit 13 converts the received signal into an analog signal. The direction switching device 107 multiplies the analog signal by 1 or -1 and outputs the resultant signal S5 to the comparator 15.

At that time, since both the signals S2 and S3 are set to "0", the signal S5 is input to the motor 23 as it is and thereby the pick-up is fully accelerate in the predetermined direction.

When the motor 23 is being started, a signal proportional to the speed is output from the speed detector 25.

When the motor 23 rotates, the output signal S3 of the integration circuit 27 is output in the negative direction.

The comparator 15 compares the signal 53 with the signal S5. The comparator 19 also compares the position error signal S4 with the signal S2. When the signal S4 is equal to the signal S2, the motor 23 is decelerated.

When the pick-up is placed in the desired position, since 54 = 0 and S2 = 0, the motor 23 is stopped. At that time, the position error signal S4 is in the range determined by the window comparator 31 and the output signal TAC of the window comparator 31 is set to "1". Thus, the controller 11 detects that the track jump operation was completed. After a predetermined time elapsed, the controller 11 sets both the signal DATA and the reset signal RST to "0" so as to complete the track jump operation.

At that time, the controller 11 turns on the switch 1 and places the switch 17 in the low pass filter 9 side. Thus, the apparatus enters the track following mode.

In this embodiment, the position error signal S4 is input to the window comparator 31. When the position error signal S4 is in the predetermined range, the controller 11 determines that the track jump operation was completed.

As was described above, since the position error signal S4 is used to determine whether or not the track jump operation was completed, an affect of an external vibration against the apparatus can be reduced.

During the track jump state, since the position control loop is structured, the suppression degree against vibrations in low frequency range is high. In other words, the position error signal S4 is less affected by an external vibration frequency than the speed signal.

In addition, since the position error signal S4 is output just when a desired position is set, the response in the track jump initial state of the TAC signal can be improved.

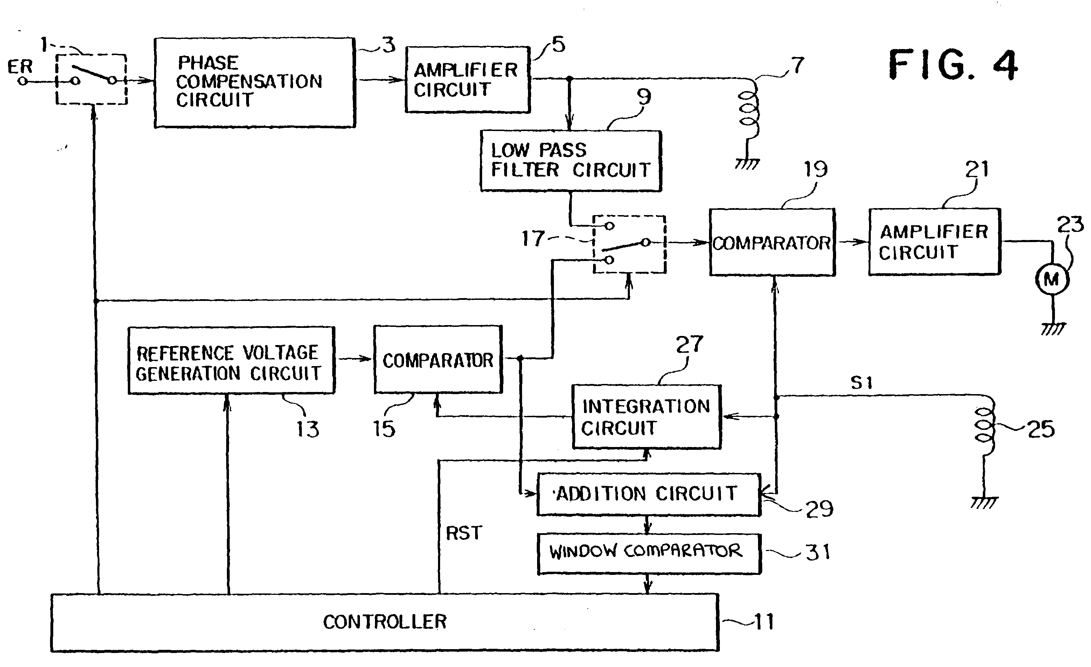

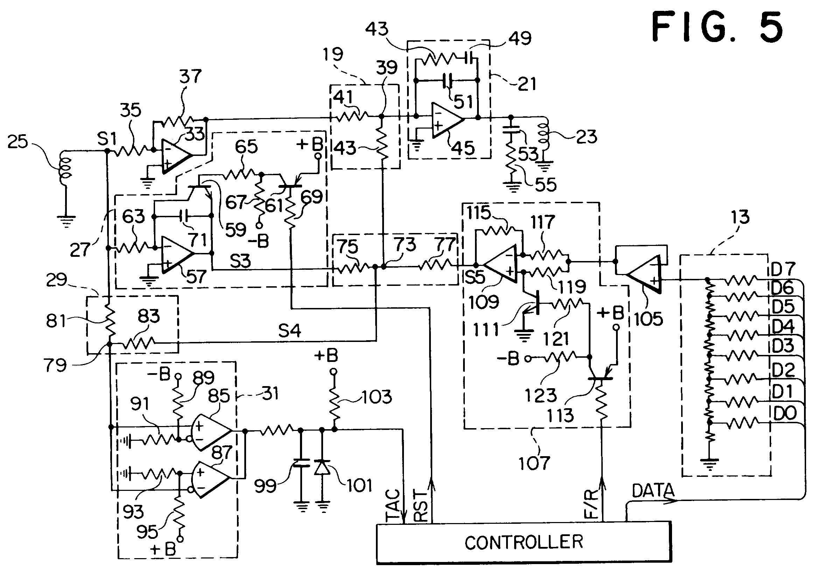

Then, by referring to FIGS. 4 and 5, a second embodiment of the present invention will be described in the following. FIGS. 4 and 5 are a block diagram and a circuit diagram showing the structure of a track jump control circuit of the second embodiment of the present invention. The portions which are same as those in the first embodiment have the same numerals and the description thereof will be omitted.

In the second embodiment, an addition circuit 29 is used to add the position error signal S4 and the speed signal of the pick-up. The added signal is input to the window comparator 31 so as to determine whether or not the track jump operation was completed. In this embodiment, the position error signal S4 is added to the speed signal of the pick-up in the ratio of 5 to 1.

According to the second embodiment, the controller 11 can monitor the speed state and the position error state by means of one window comparator 31.

In the CD-ROM drive apparatus, CD player, or the like, when the power is turned on, information at the first position of the disc named TOC should be verified. However, since this information is recorded at the most inner peripheral position, the controller 11 moves the pick-up to the inner peripheral direction of the disc in a method other than the track jump method until the pick-up contacts the stopper.

At that time, even if no special switch is provided at the stopper portion, since the speed signal is monitored, the contact of the pick-up to the stopper can be readily detected.

In addition, the addition ratio of the position error signal S4 and the speed signal can be set in various manners according to applications.

Moreover, in the second embodiment, it is possible to provide a potentiometer for detecting the pick-up position instead of the integration circuit 27 so as to input an output signal of the potentiometer to the comparator 15.

It should be understood that the present invention can be applied to other record and playback apparatuses besides the optical record and playback apparatus.

## Claims

1. A track jump control circuit for a record and/or playback apparatus, comprising:
a pick-up (25) for reading information stored on a disc;
moving means (23) for moving said pick-up in a radial direction of said disc;
driving means (21) for generating a driving signal and for driving said moving means according to said driving signal;
speed detecting means (25) for detecting the speed of said pick-up and for outputting a speed signal (S1);
position computing means (27) responsive to the speed signal for generating a position signal (S3) representative of the position of said pick-up;
means (11, 13) for generating a reference signal (S4) representative of the distance over which said pick-up is to be moved in a track jump mode;
comparing means (15) for comparing said reference signal (S4) with said position signal (S3) and for sending a continuously variable track jump control signal, dependant upon the outcome of that comparison, to said driving means; and
stopping means responsive to the track jump control signal to cause said driving means to stop driving the moving means when said track jump control signal is in a first predetermined range;
characterized in that the track jump control signal is a continuously variable difference signal representative of the difference between the reference signal (S4) and the position signal (S3) and the driving means drives the moving means (23) at a speed dependant on the said difference,
and in that the stopping means is responsive to the speed signal (S1) as well as the track jump control signal, and it is arranged to cause the driving means to stop driving the moving means when said track jump control signal is in the first predetermined range at the same time that the speed signal is in a second predetermined range.

2. A track jump control circuit as set forth in Claim 1, wherein said position computing means is an integration circuit (27) for integrating said speed signal (S1), which is output from said speed detecting means (25).

3. A track jump control circuit as set forth in Claim 1, wherein said stopping means includes:
addition means (29, fig. 4) for adding said difference signal to said speed signal in a predetermined ratio;
a window comparator (31) for detecting whether an output signal of said addition means (29) is in a predetermined range;
a controller (11) for receiving an output signal of said window comparator (31); and
a switch (17) connected betwen said comparing means (15) and said moving means (23);
wherein said controller (11) causes said switch (17) to open when said window comparator (21) detects that said output signal of said addition means (29) is in said predetermined range.

4. A track jump control circuit as set forth in Claim 2 or 3, wherein said pick-up (25) is a potentiometer for detecting the amount of movement (2) thereof.

5. A track jump control circuit as set forth in Claim 3, wherein said addition means (29) adds said difference signal and said speed signal, the addition ratio of the former being larger than that of the latter.

## Patentansprüche

1. Spursprungsteuerschaltung für ein Aufzeichnungs- und/oder Wiedergabegerät, mit:
einem Aufnehmer (25) zum Lesen von Information, die auf einer Platte gespeichert ist;
einer Bewegungseinrichtung (23) zum Bewegen des Aufnehmers in einer radialen Richtung der Platte;
einer Treibereinrichtung (21) zum Erzeugen eines Treibersignals zum Treiben der Bewegungseinrichtung entsprechend dem Treibersignal;
einer Geschwindigkeitsermittlungseinrichtung (25) zum Ermitteln der Geschwindigkeit des Aufnehmers und zum Ausgeben eines Geschwindigkeitssignals (S1);
einer Positionsberechnungseinrichtung (27), die auf das Geschwindigkeitssignal anspricht, zum Erzeugen eines Positionssignals (S3), das die Position des Aufnehmers darstellt;
einer Einrichtung (11, 13) zum Erzeugen eines Referenzsignals (S4), das die Strecke darstellt, über die der Aufnehmer in einer Spursprungbetriebsart zu bewegen ist;
einer Vergleichseinrichtung (15) zum Vergleichen des Referenzsignals (S4) mit dem Positionssignal (S3) und zum Übergeben eines kontinuierlich veränderlichen Spursprungsteuersignal in Abhängigkeit vom Ergebnis dieses Vergleichs an die Treibereinrichtung; und
einer Stoppeinrichtung, die auf das Spursprungsteuersignal anspricht, um zu bewirken, daß die Treibereinrichtung aufhört, die Bewegungseinrichtung zu treiben, wenn das Spursprungsteuersignal in einem ersten vorbestimmten Bereich ist;
dadurch gekennzeichnet, daß das Spursprungsteuersignal ein kontinuierlich veränderliches Differenzsignal ist, das die Differenz zwischen dem Referenzsignal (S4) und dem Positionssignal (S3) darstellt und die Treibereinrichtung die Bewegungseinrichtung (23) mit einer Geschwindigkeit, die von der Differenz abhängt, treibt,
und daß die Stoppeinrichtung auf das Geschwindigkeitssignal (S1) sowie auf das Spursprungsteuersignal anspricht und so eingerichtet ist, daß sie bewirkt, daß die Treibereinrichtung aufhört, die Bewegungseinrichtung zu treiben, wenn das Spursprungsteuersignal zur gleichen Zeit, in der das Geschwindigkeitssignal in einem zweiten vorbestimmten Bereich ist, im ersten vorbestimmten Bereich ist,.

2. Spursprungsteuerschaltung nach Anspruch 1, wobei die Positionsberechnungseinrichtung eine Integrierschaltung (27) zum Integrieren des Geschwindigkeitssignals (S1) ist, das von der Geschwindigkeitsermittlungseinrichtung (25) ausgegeben wird.

3. Spursprungsteuerschaltung nach Anspruch 1, wobei die Stoppeinrichtung aufweist:
eine Addiereinrichtung (29, Fig. 4) zum Addieren des Differenzsignals zu dem Geschwindigkeitssignal in einem vorbestimmten Verhältnis;
einen Fensterkomparator (31) zum Ermitteln, ob ein Ausgangssignal der Addiereinrichtung (29) in einem vorbestimmten Bereich ist;
eine Steuereinrichtung (11) zum Empfangen eines Ausgangssignals des Fensterkomparators (31); und
einen Schalter (17), der zwischen die Vergleichseinrichtung (15) und die Bewegungseinrichtung (23) geschaltet ist;
wobei die Steuereinrichtung (11) bewirkt, daß der Schalter (17) öffnet, wenn der Fensterkomparator (21) ermittelt, daß das Ausgangssignal der Addiereinrichtung (29) in dem vorbestimmten Bereich ist.

4. Spursprungsteuerschaltung nach Anspruch 2 oder 3, wobei der Aufnehmer (25) ein Potentiometer ist zum Ermitteln der Bewegungsgröße (2) desselben.

5. Spursprungsteuerschaltung nach Anspruch 3, wobei die Addiereinrichtung (29) das Differenzsignal und das Geschwindigkeitssignal addiert, wobei das Addierverhältnis des ersteren größer ist als das des letzteren.

## Revendications

1. Circuit de commande de saut de piste pour un appareil d'enregistrement et/ou de lecture, comprenant:
un lecteur (25) pour lire une information stockée sur un disque;
un moyen de déplacement (23) pour déplacer ledit lecteur suivant une direction radiale dudit disque;
un moyen de pilotage (21) pour générer un signal de pilotage et pour piloter ledit moyen de déplacement conformément audit signal de pilotage;
un moyen de détection de vitesse (25) pour détecter la vitesse dudit lecteur et pour émettre en sortie un signal de vitesse (S1);
un moyen de calcul de position (27) sensible au signal de vitesse pour générer un signal de position (S3) représentatif de la position dudit lecteur;
un moyen (11, 13) pour générer un signal de référence (S4) représentatif de la distance dont ledit lecteur doit être déplacé dans un mode saut de piste;
un moyen de comparaison (15) pour comparer ledit signal de référence (S4) audit signal de position (S3) et pour envoyer un signal de commande de saut de piste variable en continu, en fonction du résultat de cette comparaison, sur ledit moyen de pilotage; et
un moyen d'arrêt sensible au signal de commande de saut de piste pour forcer ledit moyen de pilotage à arrêter de piloter le moyen de déplacement lorsque ledit signal de commande de saut de piste est dans une première plage prédéterminée,
caractérisé en ce que le signal de commande de saut de piste est un signal de différence variable en continu représentatif de la différence entre le signal de référence (S4) et le signal de position (S3) et le moyen de pilotage pilote le moyen de déplacement (23) à une vitesse qui dépend de ladite différence; et en ce que
le moyen d'arrêt est sensible au signal de vitesse (S1) ainsi qu'au signal de commande de saut de piste, et il est agencé pour forcer le moyen de pilotage à arrêter de piloter le moyen de déplacement lorsque ledit signal de commande de saut de piste est dans la première plage prédéterminée en même temps que le signal de vitesse est dans une second plage prédéterminée.

2. Circuit de commande de saut de piste selon la revendication 1, dans lequel ledit moyen de calcul de position est un circuit d'intégration (27) pour intégrer ledit signal de vitesse (S1) qui est émis en sortie depuis ledit moyen de détection de vitesse (25).

3. Circuit de commande de saut de piste selon la revendication 1, dans lequel ledit moyen d'arrêt inclut:
un moyen d'addition (29, figure 4) pour additionner ledit signal de différence audit signal de vitesse selon un rapport prédéterminé;
un comparateur de fenêtre (31) pour détecter si oui ou non un signal de sortie dudit moyen d'addition (29) est dans une plage prédéterminée;
un contrôleur (11) pour recevoir un signal de sortie dudit comparateur de fenêtre (31); et
un commutateur (17) connecté entre ledit moyen de comparaison (15) et ledit moyen de déplacement (23),
dans lequel ledit contrôleur (11) force ledit commutateur (17) à s'ouvrir lorsque ledit comparateur de fenêtre (21) détecte que ledit signal de sortie dudit moyen d'addition (29) est dans ladite plage prédéterminée.

4. Circuit de commande de saut de piste selon la revendication 2 ou 3, dans lequel ledit lecteur (25) est un potentiomètre pour détecter sa valeur de déplacement (2).

5. Circuit de commande de saut de piste selon la revendication 3, dans lequel ledit moyen d'addition (29) additionne ledit signal de différence et ledit signal de vitesse, le rapport d'addition du premier étant supérieur à celui du second.
